# EUROPÄISCHE PATENTSCHRIFT

(11) **EP 1 166 262 B1**
(45) Veröffentlichungstag und Bekanntmachung des Hinweises auf die Patenterteilung: **24.11.2004**
(21) Anmeldenummer: 00906125.0
(22) Anmeldetag: 06.03.2000
(51) Int. Cl.: G11B 7/24

(54) **AUFZEICHNUNGSMEDIUM FÜR OPTISCHE DATENSPEICHER, VERFAHREN ZUR HERSTELLUNG DES AUFZEICHNUNGSMEDIUMS UND OPTISCHER DATENSPEICHER MIT EINER ENTSPRECHENDEN AUFZEICHNUNGSSCHICHT**
RECORDING MEDIUM FOR OPTICAL DATA STORAGE DEVICES, METHOD FOR PRODUCING SAID RECORDING MEDIUM AND OPTICAL DATA STORAGE DEVICE WITH A CORRESPONDING RECORDING LAYER
SUPPORT D'ENREGISTREMENT POUR MEMOIRES DE DONNEES OPTIQUES, SON PROCEDE DE PRODUCTION ET MEMOIRE DE DONNEES OPTIQUE PRESENTANT UNE COUCHE D'ENREGISTREMENT CORRESPONDANTE

(30) Priorität: 05.03.1999 CH 41699
(43) Veröffentlichungstag der Anmeldung: 02.01.2002
(73) Patentinhaber: Interaxia AG, 6300 Zug (CH)
(72) Erfinder: ZAFIROV, Atanas, CH-6301 Zug (CH); RAKOVSKI, Slavtcho, CH-6319 Allenwinden (CH); BAKARDJIEVA-ENEVA, Jana, CH-6319 Allenwinden (CH)
(74) Vertreter: Frei, Alexandra Sarah
(86) Internationale Anmeldenummer: PCT/CH2000/000125
(87) Internationale Veröffentlichungsnummer: WO 2000/054264

(56) Entgegenhaltungen:
- US-A- 5 204 220
- US-A- 5 436 113
- DATABASE WPI Section Ch, Week 199040 Derwent Publications Ltd., London, GB; Class A89, AN 1990-302816 XP002137272 & JP 02 215588 A (SANYO ELECTRIC CO), 28. August 1990 (1990-08-28)
- PATENT ABSTRACTS OF JAPAN vol. 012, no. 206 (M-708), 14. Juni 1988 (1988-06-14) & JP 63 009577 A (KURARAY CO LTD), 16. Januar 1988 (1988-01-16)

## Beschreibung

Die Erfindung liegt auf dem Gebiete optischer Datenspeicher, insbesondere optischer Datenspeicher, die mittels Laser beschreib- und lesbar sind. Die Erfindung betrifft ein Aufzeichnungsmedium für die Aufzeichnungsschicht eines derartigen Datenspeichers, ein Verfahren zur Herstellung des Aufzeichnungsmediums und einen optischen Datenspeicher mit einer Aufzeichnungsschicht, die aus dem Aufzeichnungsmedium besteht, je nach den Oberbegriffen der entsprechenden, unabhängigen Patentansprüche.

Mittels Laser beschreib- und lesbare, optische Datenspeicher (z.B. CD-R, DVD-R, DVD-RAM, DVD-RW oder HD) weisen einen üblicherweise scheibenförmigen, transparenten Träger anf, der üblicherweise aus Polycarbonat besteht, auf seiner einen Seite eine üblicherweise spiralförmige Aufzeichnungsrille aufweist und auf dieser Seite mit üblicherweise drei Schichten beschichtet ist. Diese drei Schichten sind eine Aufzeichnungsschicht, eine reflektierende Schicht und eine Schutzlackschicht. Die Aufzeichnungsschicht liegt auf der durch die Rille strukturierten Seite des Trägers direkt auf dem Trägermaterial und besteht aus einem Aufzeichnungsmedium, das einen Farbstoff oder ein Farbstoffgemisch enthält, dessen optische Eigenschaften durch einen Laserstrahl (Schreibstrahl) veränderbar sind. Die reflektierende Schicht liegt auf der Aufzeichnungsschicht und besteht üblicherweise aus einem Metall (z.B. Silber, Gold oder Aluminium). Die Schutzlackschicht liegt auf der reflektierenden Schicht und besteht üblicherweise aus einem durch ultraviolettes Licht aushärtharen Kunststofflack.

Zum Beschreiben des Datenspeichers wird dieser relativ zu einem Laserstrahl (Schreibstraht) in Rillenrichtung bewegt (rotiert) und durch den Laser beschrieben, wobei der Laser durch den Träger und die Aufzeichnungsschicht auf die reflektierende Schicht gerichtet ist. Wellenlängenbereich und Energie des Schreibstrahles sind dabei derart ausgelegt, dass Absorption des Laserlichtes in der Aufzeichnungsschicht zu einer lokalen Erhitzung führt, durch die sich zwischen Trägermaterial und Aufzeichnungsschicht ein blasenförmiger Pit bildet und durch die in der Aufzeichnungsschicht eine chemische Reaktion zur lokalen Veränderung der optischen Eigenschaften (z.B. Entfärbung) des in dieser Schicht enthaltenen Farbstoffes oder Farbstoffgemisches führt. Die Aufzeichnung auf dem optischen Datenspeicher besteht im wesentlichen aus einer Abfolge von durch den Schreibstrahl veränderten Stellen mit Pit und einem chemisch veränderten Farbstoff oder Farbstoffgemisch und von unveränderten Stellen.

Zum Lesen des beschriebenen Datenspeichers wird dieser wiederum in Rillenrichtung relativ zu einem Lesestrahl bewegt, wobei der Lesestrahl eine niedrigere Intensität hat als der Schreibstrahl und wiederum durch den Träger und die Aufzeichnungsschicht auf die reflektierende Schicht gerichtet ist. Unterschiede in der Reflexion des Lesestrahles (stärkere und schwächere Reflexion) an veränderten oder nicht veränderten Stellen werden als Auslesesignale ausgewertet.

Ein Herstellungsprozess für derartige Datenspeicher läuft beispielsweise in den folgenden Prozessschritten ab:
- Herstellung des Polycarbonat-Trägers durch Spritzguss,
- Beschichten des rotierenden Trägers mit einer Lösung, in der die Bestandteile des Aufzeichnungsmediums gelöst oder als Kolloid in einem organischen Lösungsmittel oder Lösungsmittelgemisch enthalten sind, wobei die Lösung durch Zentrifugalkraft auf dem Träger verteilt und überflüssige Lösung zentrifugal abgeschleudert wird,
- Entfernen des Lösungsmittels oder Lösungsmittelgemisches durch Abdampfen,
- Aufbringen der reflektierenden Schicht durch "sputtering",
- Aufbringen und Aushärten eines Schutzlackes.

Die genannten Schritte werden üblicherweise als kontinuierlicher Prozess durchgeführt, in dem vorteilhafterweise auch Kontrollschritte integriert sind, in denen die Zwischenprodukte meist optisch kontrolliert und fehlerhafte Produkte ausgeschieden werden.

An die oben beschriebenen Datenspeicher werden dauernd steigende Anforderungen gestellt, die sich vor allem auf die Schreib- und Lesegeschwindigkeit, auf die Schreib- und Lesequalität, auf die Haltbarkeit und nicht zuletzt auf den Preis beziehen. Schreib- und Lesecharakteristiken, sowie auch Haltbarkeit und Preis der Datenträger sind in hohem Masse von den Eigenschaften der Aufzeichnungsschicht abhängig, so dass die Anforderungen an diese Schicht sehr vielfältig sind. Insbesondere soll diese Schicht eine für den Schreibvorgang geeignete chemische Reaktion erlauben, die für schnelles Schreiben möglichst wenig Energie benötigen soll, und sie soll gleichzeitig für eine hohe Haltbarkeit chemisch möglichst stabil sein. Die chemische Stabilität der Aufzeichnungsschicht ist auch wichtig, weil dadurch weitgehend bestimmt ist, ob für die reflektierende Schicht ein sehr edles und teures Metall verwendet werden muss oder ob ein unedleres Metall genügt. Ferner muss die Lösung des Aufzeichnungsmediums, die zur Herstellung der Aufzeichnungsschicht dient, für das Auftragen mittels Zentrifugalkraft genau definierte rheologische Eigenschaften haben, derart, dass die resultierende Schicht eine genau definierte und möglichst gleichmässige Dicke hat, und sie soll auch schnell und problemlos getrocknet werden können.

Die in den Aufzeichnungsschichten optischer Datenträger üblicherweise eingesetzten, durch einen Schreibstrahl in ihren optischen Eigenschaften veränderbaren Farbstoffe sind beispielsweise kationische Methin- oder Polymethinfarbstoffe (Cyaninfarbstoffe), Phthalocyaninfarbstoffe, Azofarbstoffe oder metallisierte Formazane, die im Handel beispielsweise als Chloride, Bromide, Fluoride, Perchlorate, Tetrafluoroborate oder mit Anionen von Sulfon- oder Carbonsäuren erhältlich sind. Damit die optischen Eigenschaften der Farbstoffe durch den Schreibstrahl leicht verändert werden können, enthält das Aufzeichnungsmedium zusätzlich zum Farbstoff einen sogenannten Quencher.

Farbstoffe, die sich für den Einsatz in Aufzeichnungsschichten von optischen Datenspeichern eignen, sind beispielsweise beschrieben in den Publikationen: EP-0403797, WO-93/22142, WO-98/14612, WO-99/37717, WO-99/05221, WO-98/34988, US-5900348 (Methin- und Polymethin- oder Cyaninfarbstoffe), JP-52047824, JP-58069255, JP-07314897 (Phthalocyanin-Farbstoffe), US-5731054, US-5922504 (metallisierte Formazanfarbstoffe). Es wird auch vorgeschlagen, Farbstoffmischungen, die zwei oder drei der genannten Farbstoffe enthalten, zu verwenden.

Auch Quencher sind auf dem Markte beispielsweise erhältlich unter den Handelsnamen IRG 23 oder IRG 003 von Nippon Kayako Co. Ltd.

Es zeigt sich nun, dass Lösungen, die die oben genannten, bekannten Farbstoffe und Quencher enthalten, nicht sehr stabil sind, da die Quencher zersetzbar sind. Aus diesem Grunde können die Lösungen für die Herstellung der Aufzeichnungsschichten nicht in grösseren Mengen erstellt und an Lager gelegt und insbesondere nicht uneingeschränkt rezykliert werden. Es zeigt sich auch, dass optische Datenspeicher mit Aufzeichnungsschichten, die nur die genannten Farbstoffe und Quencher enthalten, mit nur beschränkten Geschwindigkeiten beschreibbar sind. Ferner sind wirken derartige Aufzeichnungsschichten korrosiv auf die reflektierende Schicht derart, so dass diese für eine genügende Beständigkeit des Datenspeichers aus Silber oder aus Gold herzustellen ist.

Die Publikation US-5 436 113 beschreibt einen optischen Datenspeicher dessen Aufzeichnungsschicht zur Stabilisierung ein Phenol enthält.

Die Erfindung stellt sich nun die Aufgabe, ein Aufzeichnungsmedium für Aufzeichnungsschichten von optischen Datenspeichern aufzuzeigen, welches Aufzeichnungsmedium eine gegenüber bekannten Aufzeichnungsmedien markant erhöhte Stabilität aufweist sowohl in der Aufzeichnungsschicht als auch in der für die Herstellung der Aufzeichnungsschicht verwendeten Lösung.

Diese Aufgabe wird gelöst durch das Aufzeichnungsmedium für Aufzeichnungsschichten optischer Datenspeicher, durch das Verfahren zur Herstellung des Aufzeichnungsmediums und durch den optischen Datenspeicher, wie sie in den entsprechenden, unabhängigen Patentansprüchen definiert sind.

Die Erfindung basiert auf der Idee, das Aufzeichnungsmedium durch Zugabe eines Stabilisators in Form eines Phenols mit einer oder mehreren Hydroxy-Gruppen, welches Phenol vorteilhafterweise substituiert ist, zu stabilisieren. Das Phenol liegt im Aufzeichnungsmedium als Phenolation vor und ersetzt einen Teil der üblichen Gegenionen des kationischen Farbstoffes (z.B. Perchlorationen). Das Aufzeichnungsmedium kann noch weiter stabilisiert werden, dadurch, dass ein weiterer Teil der üblichen Gegenionen des kationischen Farbstoffes ersetzt wird durch metallorganische Thiolen-Komplex-Anionen, die auch die Quencherfunktion übernehmen können, derart, dass in einem solchen Falle dem Aufzeichnungsmedium kein üblicher Quencher zugegeben werden muss. Es eignen sich dazu insbesondere anionische Thiolenkomplexe mit einem zentralen Metallatom, das mindestens zwei Wertigkeiten hat.

Ein Aufzeichnungsmedium und eine Lösung dieses Mediums, die einen kationischen Farbstoff (oder Gemisch von mehreren kationischen Farbstoffen) mit üblichen Anionen und einen handelsüblichen Quencher enthalten, zeigen eine bedeutend höhere Stabilität, wenn sie zusätzlich als Stabilisator ein vorteilhafterweise substituiertes Phenol enthalten. Dieser Effekt wird noch verstärkt durch Substitution eines Teils der üblichen Anionen durch das Phenol bzw. durch entsprechende Phenolationen. Eine weitere Erhöhung der Stabilität ergibt sich durch Substitution weiterer Anionen und Ersatz des Quenchers durch einen anionischen, metallorganischen Thiolen-Komplex.

Die erhöhte Stabilität des erfindungsgemässen Aufzeichnungsmediums führt zu den folgenden Vorteilen:
- Datenspeicher, die das Aufzeichnungsmedium enthalten, sind sowohl in beschriebenem als such in unbeschriebenem Zustand länger haltbar.
- Weil das Aufzeichnungsmedium weniger korrosiv ist, kann für die reflektierende Schicht anstelle von Silber oder Gold ein weniger edles und dadurch entsprechend billigeres Metall, beispielsweise Aluminium, verwendet werden.
- Die für die Herstellung der Aufzeichnungsschichten verwendete Lösung kann über längere Zeit eingesetzt und insbesondere im wesentlichen unlimitiert rezykliert werden, so dass sich keine umweltgefährdenden Abfälle ergeben.

Es zeigt sich auch, dass optische Datenspeicher, die das erfindungsgemässe Aufzeichnungsmedium enthalten, zusätzlich zu den oben genannten, direkt aus der erhöhten Stabilität des Aufzeichnungsmediums ableitbaren Vorteilen auch weitere, die Schreib- und Lesequalität beeinflussende Vorteile gegenüber bekannten Datenspeichern aufweisen, insbesondere:
- Die für das Schreiben und Lesen wichtigen optischen Eigenschaften der Aufzeichnungsschicht sind verbessert.
- Die Pit-Abformungen sind schärfer.
- Die Datenspeicher können mit sehr guter Qualität mit höchsten Geschwindigkeiten beschrieben werden (mindestens bis 16x).
- Die rheologischen Eigenschaften der Lösung des Aufzeichnungsmediums sind besser, so dass sie schneller und mit besserer Groove-Füllung und Gleichmässigkeit und dadurch als dünnere, schneller trocknende Schicht auf den Träger aufgebracht werden kann, wodurch nicht nur die Schreib- und Lesequalität verbessert, sondern auch die Zykluszeit verkürzt und das Produkt dadurch, dass weniger Farbstoff verwendet werden muss, billiger wird.
- Das Aufzeichnungsmedium ist in allen in der Herstellung von optischen Datenspeichern üblichen Lösungsmitteln gut löslich.

Das erfindungsgemässe Aufzeichnungsmedium für optische Datenspeicher weist also die folgenden Bestandteile auf:
- einen kationischen Farbstoff (Methin- oder Polymethinfarbstoff (Cyaninfarb-Stoff), Phtahlocyaninfarbstoff, Formazanfarbstoff oder Azofarbstoff), dessen optische Eigenschaften durch die Einwirkung eines Schreibstrahls veränderbar sind;
- ein Phenol mit einer oder mehreren Hydroxy-Gruppen, das vorteilhafterweise ein substituiertes Phenol ist, als Stabilisator, wobei das Phenol vorteilhafterweise in der Form von Phenolationen vorliegt und einen Teil der üblichen, korrosiv wirkenden Anionen des Farbstoffs ersetzt;
- und einen Quencher oder vorteilhafterweise anstelle des Quenchers einen anionischen metallorganischen Thiolen-Komplex der die Quencherfunktion übernimmt und einen weiteren Teil der üblichen, korrosiv wirkenden Anionen des Farbstoffs ersetzt und dadurch weiter zur Stabilität des Aufzeichnungsmediums beiträgt.

Das erfindungsgemässe Aufzeichnungsmedium enthält die Phenolationen in einer Menge relativ zur Farbstoffmenge derart, dass die Phenolationen zwischen 1 und 30% (Molprozent) der Anionen bildet. Erfindungsgemässe Aufzeichnungsmedien, die zusätzlich einen anionischen, metallorganischen Thiolen-Komplex enthalten, enthalten diesen in einer Menge relativ zur Farbstoffmenge derart, dass er weitere 1 bis 50% der Anionen bildet. Da manche Stabilisator-Anionen die optischen Eigenschaften des Aufzeichnungsmediums negativ beeinflussen können, sind höhere Anteile an Stabilisator-Ionen nicht vorteilhaft. Mit höheren Anteilen an metallorganischem Thiolen-Komplex-Ionen wird die Löslichkeit des Aufzeichnungsmediums ungenügend.

Als Stabilisatoren im erfindungsgemässen Aufzeichnungsmedium vorteilhafterweise eingesetzte substituierte Phenole oder entsprechende Phenolate sind: 2,6-Di-tert.-butylphenol, 2,6-Di-tert.-butyl-4-methylphenol, 2-tert.-Butyl-4-methylphenol, 6-tert.-Butyl-3-methylphenol, α-Methylbenzylphenole, 2,6-Di-tert.-butyl-4-methoxyphenol, 4-Hydroxy-3,5-di-tert.-butylbenzylalkohol, 6-tert.-Butyl-2-methylphenol, Ester der β-(4-Hydroxy-3,5-di-tert.-butylphenyl)propionsäure, 2,5-Di-tert.-butylhydrochinon, 2,5-Di-tert.-amylhydorchinon, 2,2'-Methylen-bis(6-tert.-butyl-4-methylphenol), 2,2'-Methylenbis(4,6-dimethylphenol), 2,2'-Isobutylidenbis(4,6-dimethylphenol,), 2,2'-Methylidenbis(4-methyl-6-ac-ryklohexylphenol), 4,4-Methylenbis(2,6-di-tert.-butylphenol), 4,4'-Butylidenbis(6-tert.-butyl-3-methylphenol), 2,2'-Thiobis(6-ter.-butyl-4-methylphenol), 2,2'-Thiobis(4-methyl-6-α-methylbenzylphenol), 2,2'-Thiobis(4,6-de-sek.-amylphenol), 4,4'-thiobis(6-tert.-butyl-2-methylphenol), 4,4'-thiobis(6-tert.-butyl-3-methylphenol), Bis(4-hydroxy-3,5-di-tert.-butylbenzyl)sulfid, 1,1,3-Tris(5'-tert.-butyl-4'-hydroxy-2'-methylphenyl)butan, 2,4,6-Tria(4'-hydroxy-3',5'-di-tert.-butylbenzyl)mesitylen, 2,4-Dihydroxybenzophenon, 4-Alkoxy-2-hydroxybenzophenon, 2-Hydroxy-4-methoxybenzophenon oder Mischungen aus zwei oder mehr als zwei der genannten Phenole bzw. Phenolate.

Eine beobachtete Veränderung der optischen Eigenschaften der verwendeten Farbstoffe durch die Stabilisator-Ionen legt die Vermutung nahe, dass sich Ionenkomplexe bilden, die nicht nur durch elektrostatische Kräfte sondern auch durch Koordinationskräfte zusammengehalten werden.

Ein anionischer Thiolen-Metall-Komplex mit Quencherfunktion, der sich für das erfindungsgemässe Aufzeichnungsmedium eignet, ist beispielsweise ein Di-thiolen-Metall-komplex der folgenden Formel: 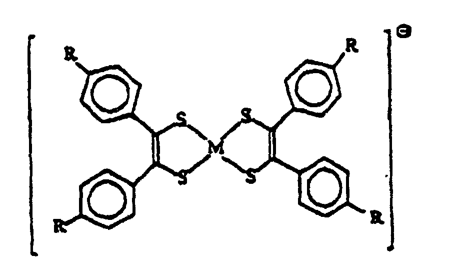 wobei M = Ni, Co, Fe, Cu, Sn, Zn, Al, Ti, Cr, V, Pt oder Pd ist;
und wobei -R = -H, -Cl, -Br, -J, -F, -NO₂, -CSN, -CN, -OCH₃, -OCₙH₍₂ₙ₊₁₎ mit n = 1 bis 20 oder -COOR mit R = OCₙH₍₂ₙ₊₁₎ist.

Die Ionensubstitution, die für die Herstellung des erfindungsgemässen Aufzeichnungsmediums vorteilhaft ist, wird erreicht, indem das Phenol in Form eines Phenolates, beispielsweise als Kaliumphenolat eingesetzt wird, indem Farbstoff und Phenolat in einem organischen Lösungsmittel (z.B. Demethylformamid oder Azeton) gelöst und die Lösung bei erhöhter Temperatur (z.B. 70 - 120°) über längere Zeit (z.B. 2 bis 12 Stunden) gerührt wird. Darauf folgt ein Schritt zum Abtrennen der ersetzten Ionen, die wasserlösliche Salze bilden, beispielsweise durch Waschen mit Wasser. Die erhaltene Substanz wird dann getrocknet und bei Bedarf für die Herstellung der Lösung für die Herstellung der Aufzeichnungsschicht in beispielsweise einer Mischung von Diazetonalkohol und Methoxyethanol, von Diazetonalkohol und Ethoxyethanol, von Diazetonalkohol und Butanol, von Diazetonalkohol und Isopropanol oder in einem anderen, geeigneten organischen Lösungsmittel oder Lösungsmittelgemisch gelöst.

### Beispiel 1:

Farbstoff OM57, ein Cyaninfarbstoff mit fünf Methingruppen, der durch die Firma Fuji Photo Film Co. Ltd hergestellt wird, Quencher IRG 23, der durch die Firma Nippon Kayako Co. Ltd hergestellt wird, und 2,2'-Thiobis(6-tert.-butyl-4-methylphenol als Stabilisator werden gemischt mit den folgenden Gewichtsverhältnissen: Farbstoff : Quencher = 10 : 1, Farbstoff : Stabilisator = 10 : 3. Die Mischung wird mit einer Konzentration von 3% (Gewicht) in Diazetonalkohol und Isopropanol (10: 1) gelöst durch Rühren bei Raumtemperatur während mindestes 24 Stunden. Dann wird die Lösung unter Stickstoff mit Druck durch ein Filter des Typs RC58 (Schleicher & Schuell) filtriert. Die derart hergestellte Farbstofflösung wird für die Herstellung von Aufzeichnungsschichten eingesetzt, wobei sie fortwährend gerührt wird.

Für die Herstellung von Aufzeichnungsschichten wird die Lösung des Aufzeichnungsmediums auf die mit Rillen strukturierte Seite von Polycarbonat-Trägern aufgeschleudert mit einer Schichtdicke von ca. 180 bis 220 nm. Die beschichteten Träger werden dann bei 80°C getrocknet. Auf die getrocknete Aufzeichnungsschicht wird nach an sich bekannten Methoden durch Sputtern eine Silberschicht mit einer Schichtdicke von ca. 60 bis 90 nm aufgebracht. Dann wird der Schutzlack aufgeschleudert und unter ultraviolettem Licht ausgehärtet.

Abgeschleuderte Lösung des Aufzeichnungsmediums wird für eine Rezyklierung, augearbeitet, indem eine notwendige Menge Quencher und Lösungsmittel zugegeben werden. Wegen des steigenden Gehaltes an zersetztem Quencher ist die Rezyklierbarkeit limitiert.

Zur Bestimmung der Haltbarkeit der Datenspeicher werden diese bei einer Temperatur von 80°C und einer relativen Luftfeuchtigkeit von 85% während 72 Stunden gealtert. Dann wird auf die Datenspeicher mit einem Philipps Laserrecorder Typ PCRW 404 Testinformation aufgezeichnet und es werden mit Hilfe eines kalibrierten CD-CATS Messgeräts der BLER-Wert (block error rate) und die pit- und land-Jitter-Werte bestimmt und mit entsprechenden Bestimmungen von ungealtert beschriebenen Datenspeichern verglichen.

### Beispiel 2

Zu einer 10%igen Lösung (Gewichtsprozente) des Farbstoffes OM 57 (wie in Beispiel 1) in Dimethylformamid werden relativ zum Farbstoff 20% (Molprozent) des Kaliumsalzes von 2,2'-Thiobis(6-tert.-butyl-4-methylphenol) zugegeben. Die Lösung wird während 2 Stunden bei 70°C gerührt. Die Lösung wird dann in kaltes Wasser gegossen, wobei die organischen Bestandteile ausfallen und die wasserlöslichen Salze in Lösung gehen. Die organischen Bestandteile werden abfiltriert, aus einer Mischung von Dimethylformamid und Ethanol (4:1) umkristallisiert und dann getrocknet.

### Ausbeute: 95%

Die derart hergestellte Ionenverbindung von Farbstoff und Stabilisator wird dann mit Quencher IRG23 (Mengenverhältnis Farbstoff : Quencher = 10 : 1) gemischt und für die Herstellung von Aufzeichnungsschichten gelöst und verwendet, wie dies in Beispiel 1 beschrieben ist. Dabei kann die Schichtdicke des aufgeschleuderten Aufzeichnungsmediums auf 150 bis 180 nm reduziert werden.

### Beispiel 3

Zu einer 10%igen Lösung (Gewichtsprozente) des Farbstoffes OM 57 (wie in Beispiel 1) in Dimethylformamid werden relativ zum Farbstoff 20% (Molprozent) des Kaliumsalzes von 2,2'-Thiobis(6-tert.-butyl-4-methylphenol) zugegeben sowie 10% (Molprozent) des Tetrabutyl-ammoniumsalzes des Thiolenkomlexes mit der Formel 1, wobei M = Co und -R = -OCH₃. Die Mischung wird in der Weise weiterverarbeitet, wie dies im Beispiel 2 beschrieben ist.

Die derart hergestellte Ionenverbindung von Farbstoff, Stabilisator und Thiolenkomplex wird dann ohne Quencherzugabe für die Herstellung von Aufzeichnungsschichten gelöst und verwendet, wie dies in Beispiel 1 beschrieben ist. Dabei kann die Schichtdicke des aufgeschleuderten Aufzeichnungsmediums auf 130 bis 150 nm reduziert werden. Für die Rezyklierung von abgeschleuderter Lösung von Aufzeichnungsmedium erübrigt sich die Kontrolle des Quenchergehaltes und die Zugabe von Quencher.

Die folgende Tabelle enthält Testresultate für die nach den Beispielen 1 bis 3 hergestellte optische Datenspeicher im Vergleich mit Datenspeichern mit einer nur Farbstoff OM 57 und Quencher IRG 23 (Gewichtsverhältnis 10 : 1) enthaltenden Aufzeichnungsschicht (Stand der Technik).

| | Prozent. Veränderung vor/nach Testalterung [%] | | |
|---|---|---|---|
| | BLER | pit-Jitter | land-Jitter |
| Vergleichs-Datenspeicher (St. der Technik) | 30 | 24 | 26 |
| Datenspeicher gemäss Beispiel 1 | 12 | 10 | 12 |
| Datenspeicher gemäss Beispiel 2 | 5 | 2 | 3 |
| Datenspeicher gemäss Beispiel 3 | 1 | 0 | 1 |

## Patentansprüche

1. Aufzeichnungsmedium für optische Datenspeicher, welches Aufzeichnungsmedium einen kationischen Farbstoff oder ein Gemisch kationischer Farbstoffe mit durch einen Schreibstrahl veränderbaren optischen Eigenschaften, mindestens eine Substanz mit einer Quencherfunktion und ein Phenol oder substituiertes Phenol mit einer oder mehreren Hydroxygruppen als Stabilisator enthält, **dadurch gekennzeichnet, dass** das Phenol oder substituierte Phenol in dem Medium in Form von Phenolationen vorliegt und einen Teil der Anionen für die Farbstoff-Kationen bildet.

2. Medium nach Anspruch 1, **dadurch gekennzeichnet, dass** der Stabilisator Anionen von 2,6-Di-tert.-butylphenol, 2,6-Di-tert.-butyl-4-methylphenol, 2-tert.-Butyl-4-methylphenol, 6-tert.-Butyl-3-methylphenol, α-Methylbenzylphenol, 2,6-Di-tert.-butyl-4-methoxyphenol, 4-Hydroxy-3,5-di-tert.-butylbenzylalkohol, 6-tert.-Butyl-2-methylphenol, von einem Ester der β-(4-Hydroxy-3,5-di-tert.-butylphenyl)propionsäure. von 2,5-Di-tert.-butylhydrochinon, 2,5-Di-tert.-amylhydorchinon, 2,2'-Methylen-bis(6-tert.-butyl-4-methylphenol), 2,2'-Methylenbis(4,6-dimethylphenol), 2,2'-Isobutylidenbis(4,6-dimethylphenol,), 2,2'-Methylidenbis(4-methyl-6-α-zyklohexylphenol), 4,4-Methylenbis(2,6-di-tert.-butylphenol), 4,4'-Butylidenbis(6-tert.-butyl-3-methylphenol), 2,2'-Thiobis(6-tert-butyl-4-methylphenol, 2,2'-Thiobis(4-methyl-6-α-methylbenzyphenol), 2,2'-Thiobis(4,6-de-sek.-amylphenol), 4,4'-thiobis(6-tert.-butyl-2-methylphenol), 4,4'-thiobis(6-tert.-butyl-3-methylphenol), Bis(4-hydroxy-3,5-di-tert.-butylbenzyl)sulfid, 1,1,3-Tris(5'-tert.-butyl-4'-hydroxy-2'-methylphenyl)butan, 2,4,6-Tria(4'-hydroxy-3',5'-di-tert.-butylbenzyl)mesitylen, 2,4-Dihydroxybenzophenon, 4-Alkoxy-2-hydroxybenzophenon, 2-Hydroxy-4-methoxybenzophenon oder eine Mischung der genannten Phenolatanionen ist.

3. Medium nach einem der Ansprüche 1 oder 2, **dadurch gekennzeichnet, dass** es als Substanz mit Quencherfunktion einen anionischen, metallorganischen Thiolen-Komplexe enthält, der einen Teil der Anionen für die Farbstoff-Kationen bildet.

4. Medium nach Anspruch 3, **dadurch gekennzeichnet, dass** der anionische, metallorganische Komplex ein Di-Thiolen-Komplex der folgenden Formel ist, wobei M = Ni, Co, Fe, Cu, Sn, Zn, Al, Ti, Cr, V, Pt oder Pd ist und wobei -R = -H, -Cl, -Br, -J, -F, -NO₂, -CSN, -CN, -OCH₃, -OCₙH₍₂ₙ₊₁₎ mit n = 1 bis 20 oder -COOR mit R = OCₙH₍₂ₙ₊₁₎ ist

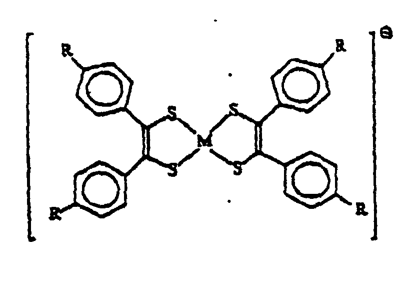

5. Medium nach einem der Ansprüche 1 bis 4, **dadurch gekennzeichnet, dass** es den Farbstoff und den Stabilisator in einem Molverhältnis von zwischen 100 : 1 und 100 : 30 enthält.

6. Medium nach einem der Ansprüche 3 bis 6, **dadurch gekennzeichnet, dass** es die den Farbstoff und den anionischem, metallorganischen Thiolen-Komplex in einem Molverhältnis zwischen 100 : 1 und 100 : 50 enthält.

7. Medium nach einem der Ansprüche 1 bis 6, **dadurch gekennzeichnet, dass** es in einem organischen Lösungsmittel oder ein Gemisch organischer Lösungsmittel gelöst ist.

8. Verwendung eines Aufzeichnungsmediums gemäss einem der Ansprüche 1 bis 7 für die Erhöhung der Stabilität von Aufzeichnungsschichten in optischen Datenspeichern und von optischen Datenspeichern.

9. Verfahren zur Herstellung des Aufzeichnungsmediums nach einem der Ansprüche 1 bis 7, **dadurch gekennzeichnet, dass** der Farbstoff und der Stabilisator in einem organischen Lösungsmittel gelöst werden, dass die Lösung bei erhöhter Temperatur gerührt wird, und dass in einem weiteren Schritt wasserlösliche Salze so weit wie möglich abgetrennt werden.

10. Verfahren nach Anspruch 9, **dadurch gekennzeichnet, dass** zusammen mit dem Farbstoff und dem Stabilisator auch der anionische, metallorganische Thiolen-Komplex gelöst wird.

11. Verfahren nach Anspruch 9 oder 10, **dadurch gekennzeichnet, dass** die gerührte Lösung zur Abtrennung der wasserlöslichen Salze mit Wasser gewaschen wird.

12. Optischer Datenspeicher mit einem Träger, einer auf dem Träger aufliegenden Aufzeichnungsschicht, die aus einem Aufzeichnungsmedium gemäss einem der Ansprüche 1 bis 7 besteht, einer auf der Aufzeichnungsschicht aufliegenden, reflektierenden Schicht und einer auf der reflektierenden Schicht aufliegenden Schutzlackschicht.

13. Optischer Datenspeicher nach Anspruch 12, **dadurch gekennzeichnet, dass** die reflektierende Schicht aus Silber, Gold oder Aluminium besteht.

14. Verfahren zur Herstellung von optischen Datenspeichern mit einem Träger, einer auf dem Träger aufliegenden Aufzeichnungsschicht, einer auf der Aufzeichnungsschicht aufliegenden, reflektierenden Schicht und einer auf der reflektierenden Schicht aufliegenden Schutzlackschicht, wobei der Träger durch Spritzguss hergestellt wird, wobei auf den Träger für eine Aufzeichnungsschicht ein in einem Lösungsmittel gelöstes Aufzeichnungsmedium aufgeschleudert wird und dann das Lösungsmittel aus dem aufgeschleuderten Aufzeichnungsmedium entfernt wird, wobei auf die Aufzeichnungsschicht durch Sputtering eine Metallschicht als reflektierende Schicht aufgebracht wird und wobei die Metallschicht mit einem Schutzlack abgedeckt wird, **dadurch gekennzeichnet, dass** das gelöste Aufzeichnungsmedium ein Medium gemäss einem der Ansprüche 1 bis 7 ist.

15. Verfahren nach Anspruch 14, **dadurch gekennzeichnet, dass** die Metallschicht aus Gold, Silber oder Aluminium besteht.

## Claims

1. Recording medium for optical data storage devices, which recording medium comprises a cationic dye or a mixture of cationic dyes with optical characteristics, which are changeable by means of a writing beam and further comprises at least one substance with a quencher function and a phenol or substituted phenol with one or more hydroxy groups as a stabiliser, **characterized in that** the phenol or substituted phenol is present in the medium in the form of phenolate ions and forms a part of the anions for the dye cations.

2. Medium according to claim 1, **characterized in that** the stabiliser comprises anions of 2,6-di-tert.-butyl-phenol, 2,6-di-tert.-butyl-4-methyl-phenol, 2-tert.-butyl-4-methyl-phenol, 6-tert.-Butyl-3-methyl-phenol, α-methyl-benzyl-phenol, 2,6-di-tert.-butyl-4-methoxy-phenol, 4-hydroxy-3,5-di-tert.-butyl-benzyl alcohol, 6-tert.-butyl-2-methyl-phenol, esters of the β-(4-hydroxy-3,5-di-tert.-butyl-phenyl) propionic acid, 2,5-di-tert.-butyl-hydroquinone, 2,5-di-tert.-amyl-hydroquinone, 2,2'-methylene-bis(6-tert.-butyl-4-methyl-phenol), 2,2'-methylene-bis(4,6-dimethyl-phenol), 2,2'-isobutylidene-bis(4,6-dimethyl-phenol), 2,2'-methyliden-bis(4-methyl-6-α-cyclo-hexyl-phenol), 4,4-methylene-bis(2,6-di-tert.-butyl-phenol), 4,4'-butylidene-bis(6-tert.-butyl-3-methyl-phenol), 2,2'-thiobis(6-ter.-butyl-4-methyl-phenol), 2,2'-thiobis(4-methyl-6-α-methyl-benzyl-phenol), 2,2'-thiobis(4,6-di-sec.-amyl-phenol), 4,4'-thiobis(6-tert.-butyl-2-methyl-phenol), 4,4'-thiobis(6-tert.-butyl-3-methyl-phenol), bis(4-hydroxy-3,5-di-tert.-butyl-benzyl)sulphide, 1,1,3-tris(5'-tert.-butyl-4'-hydroxy-2'-methyl-phenyl)butane, 2,4,6-tria(4'-hydroxy-3',5'-di-tert.-butyl-benzyl)mesitylene, 2,4-dihydroxy-benzophenone, 4-alcoxy-2-hydroxy-benzophenone, 2-hydroxy-4-methoxy-benzophenone or of a mixture of said phenolate ions.

3. Medium in accordance with one of claims 1 or 2, **characterized in that**, as a substance with a quencher function, it comprises an anionic, metallo-organic thiolene complex, which forms a part of the anions for the dye cations.

4. Medium according to claim 3, **characterized in that** the anionic, metallo-organic complex is a di-thiolene-complex of the following formula, wherein M is = Ni, Co, Fe, Cu, Sn, Zn, Al, Ti, Cr, V, Pt or Pd and wherein -R is = -H, -Cl, - Br, -J, -F, -NO₂, -CSN, -CN, -OCH₃, -OCₙH₍₂ₙ₊₁₎ with n = 1 to 20 or -COOR with R = OCₙH₍₂ₙ₊₁₎

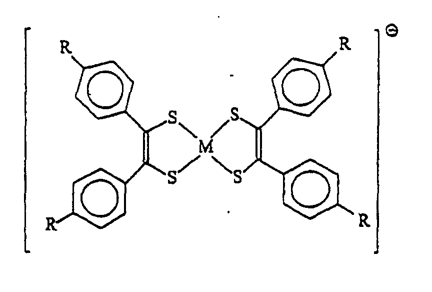

5. Medium in accordance with one of claims 1 to 4, **characterized in that** it comprises the dye and the stabiliser in a mol ratio of between 100 : 1 and 100 : 30.

6. Medium according to one of claims 3 to 6, **characterized in that** it comprises the dye and the anionic, metallo-organic thiolene complex in a mol ratio of between 100 : 1 and 100 : 50.

7. Medium in accordance with one of claims 1 to 6, **characterized in that** it is dissolved in an organic solvent or in a mixture of organic solvents.

8. Use of a recording medium according to one of the claims 1 to 7 for the enhancement of the stability of recording layers in optical data storage devices and of optical data storage devices.

9. Method for the production of the recording medium in accordance with one of claims 1 to 7, **characterized in that** the dye and the stabiliser are dissolved in an organic solvent, that the solution is stirred at an elevated temperature and that in a further step water-soluble salts are separated to an as large degree as possible from the solution.

10. Method according to claim 9, **characterized in that** the anionic, metallo-organic thiolene complex is dissolved together with the dye and the stabiliser.

11. Method in accordance with claim 9 or 10, **characterized in that** for the separation of the water-soluble salts, the stirred solution is washed with water.

12. Optical data storage device with a carrier, with a recording layer located on top of the carrier and consisting of a recording medium according to one of claims 1 to 7, with a reflective layer located on top of the recording layer and with a protective varnish layer located on top of the reflective layer.

13. Optical data storage device according to claim 12, **characterized in that** the reflective layer consists of silver, gold or aluminium.

14. Method for the production of optical data storage devices with a carrier, with a recording layer located on top of the carrier, with a reflective layer located on top of the recording layer and with a protective varnish layer located on top of the reflective layer, wherein the carrier is manufactured by injection moulding, wherein for a recording layer, a recording medium is applied by spin-on deposition to the carrier and thereupon the solvent is removed from the recording medium applied by spin-on deposition, wherein a metal layer is applied to the recording layer as a reflective layer by sputtering and wherein the metal layer is covered by a protective varnish, **characterized in that** the dissolved recording medium is a medium in accordance with one of claims 1 to 7.

15. Method in accordance with claim 14, **characterized in that** the metal layer consists of gold, silver or aluminium.

## Revendications

1. Support d'enregistrement pour mémoires optiques de données, lequel support d'enregistrement contient un colorant cationique ou un mélange de colorants cationiques dont les propriétés optiques peuvent être modifiées par un faisceau d'écriture, au moins une substance à fonction d'extinction et un phénol ou un phénol substitué qui comprend un ou plusieurs groupes hydroxy et qui sert d'agent de stabilisation, **caractérisé en ce que** le phénol ou le phénol substitué sont présents dans le support sous forme d'ions phénolate et forment une partie des anions pour les cations du colorant.

2. Support selon la revendication 1, **caractérisé en ce que** l'agent de stabilisation est constitué d'anions de 2,6-di-tert.-butylphénol, de 2,6-di-tert.-butyl-4-méthylphénol, de 2-tert.-butyl-4-méthylphénol, de 6-tert.-butyl-3-méthylphénol, d'α-méthylbenzylphénol, de 2,6-di-tert.-butyl-4-méthoxyphénol, d'alcool 4-hydroxy-3,5-di-tert.-butylbenzylique, de 6-tert.-butyl-2-méthylphénol, d'un ester de l'acide β-(4-hydroxy-3,5-di-tert.-butylphényle)propionique, de 2,5-di-tert.-butylhydroquinone, de 2,5-di-tert.-amylhydroquinone, de 2,2'-méthylène-bis(6-tert.-butyl-4-méthylphénol), de 2,2-méthylène-bis(4,6-diméthylphénol), de 2,2'-isobutylidène-bis(4,6-diméthylphénol), de 2,2'-méthylidène-bis(4-méthyl-6-α-cyclohexylphénol), de 4,4-méthylène-bis(2,6-di-tert.-butylphénol), de 4,4'-butylidène-bis(6-tert.-butyl-3-méthylphénol), de 2,2'-thio-bis(6-tert.-butyl-4-méthylphénol), de 2,2-thio-bis(4-méthyl-6-α-méthylbenzylphénol), de 2,2-thio-bis(4,6-de-sec.-amylphénol), de 4,4-thio-bis(6-tert.-butyl-2-méthylphénol), de 4,4'-thio-bis(6-tert.-butyl-3-méthylphénol), de sulfure de bis(5-hydroxy-3,5-di-tert.-butylbenzyle), de 1,1,3-tris(5'-tert.butyl-4'-hydroxy-2'-méthylphényl)butane, de 2,4,6-tris(4'-hydroxy-3'-5'-di-tert.-butylbenzyl)mésitylène, de 2,4-dihydroxybenzophénone, de 4-alkoxy-2-hydroxybenzophénone, de 2-hydroxy-4-méthoxybenzophénone ou d'un mélange desdits anions phénolate.

3. Support selon l'une des revendications 1 ou 2, **caractérisé en ce que** comme substance à fonction d'extinction, il contient un complexe anionique et organométallique de thiolène qui forme une partie des anions pour les cations du colorant.

4. Support selon la revendication 3, **caractérisé en ce que** le complexe anionique organométallique est un complexe de di-thiolène de formule ci-dessous dans laquelle M = Ni, Co, Fe, Cu, Sn, Zn, Al, Ti, Cr, V, Pt ou Pd et dans laquelle -R = -H, -Cl, -Br, -I, -F, -NO₂, -CSN, -CN, -OCH₃, -OCₙH₍₂ₙ₊₁₎ avec n = 1 à 20 ou -COOR avec R = -OCₙH₍₂ₙ₊₁₎:

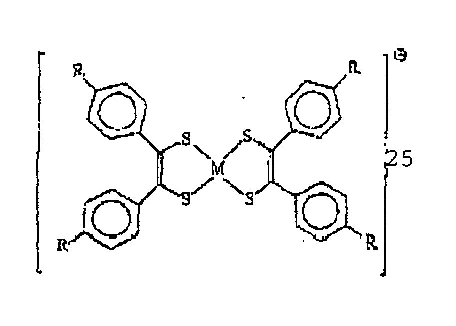

5. Support selon l'une des revendications 1 à 4, **caractérisé en ce qu'**il contient le colorant et l'agent de stabilisation dans un rapport molaire compris entre 100 : 1 et 100 : 30.

6. Support selon l'une des revendications 1 à 6, **caractérisé en ce qu'**il contient le colorant et le complexe anionique organométallique de thiolène dans un rapport molaire compris entre 100 : 1 et 100 : 50.

7. Support selon l'une des revendications 1 à 6, **caractérisé en ce qu'**il est dissous dans un solvant organique ou dans un mélange de solvants organiques.

8. Utilisation d'un support d'enregistrement selon l'une des revendications 1 à 7 pour augmenter la stabilité de couches d'enregistrement dans des mémoires optiques de données et de mémoires optiques de données.

9. Procédé de fabrication d'un support d'enregistrement selon l'une des revendications 1 à 7, **caractérisé en ce que** le colorant et l'agent de stabilisation sont dissous dans un solvant organique, **en ce que** la solution est brassée à température plus élevée et **en ce que** dans une autre étape, on sépare les sels solubles dans l'eau aussi largement que possible.

10. Procédé selon la revendication 9, **caractérisé en ce que** le complexe anionique organométallique de thiolène est également dissous avec le colorant et l'agent de stabilisation.

11. Procédé selon les revendications 9 ou 10, **caractérisé en ce que** la solution agitée est lavée pour séparer avec l'eau les sels solubles dans l'eau.

12. Mémoire optique de données dotée d'un support, d'une couche d'enregistrement appliquée sur le support et constituée d'un support d'enregistrement selon l'une des revendications 1 à 7, d'une couche réfléchissante appliquée sur la couche d'enregistrement et d'une couche de vernis de protection appliquée sur la couche réfléchissante.

13. Mémoire optique de données selon la revendication 12, **caractérisée en ce que** la couche réfléchissante est constituée d'argent, d'or ou d'aluminium.

14. Procédé de fabrication de mémoires optiques de données qui comprennent un support, une couche d'identification appliquée sur le support, une couche réfléchissante appliquée sur la couche d'enregistrement et une couche de vernis de protection appliquée sur la couche réfléchissante, le support étant fabriqué par moulage par injection, un support d'enregistrement dissous dans un solvant étant centrifugé sur le support pour obtenir une couche d'identification, le solvant étant ensuite extrait du support d'enregistrement centrifugé, une couche métallique servant de couche réfléchissante étant appliquée par pulvérisation sur la couche d'enregistrement et la couche métallique étant recouverte d'un vernis de protection, **caractérisé en ce que** le support d'enregistrement est un support selon l'une des revendications 1 à 7.

15. Procédé selon la revendication 14, **caractérisé en ce que** la couche métallique est constituée d'or, d'argent ou d'aluminium.
